# EUROPÄISCHE PATENTSCHRIFT

(11) **EP 0 548 300 B1**
(45) Veröffentlichungstag und Bekanntmachung des Hinweises auf die Patenterteilung: **14.12.1994**
(21) Anmeldenummer: 92911676.2
(22) Anmeldetag: 19.06.1992
(51) Int. Cl.: F02M 25/08, F02D 35/00

(54) **TANKENLÜFTUNGSANLAGE FÜR EIN KRAFTFAHRZEUG SOWIE VERFAHREN UND VORRICHTUNG ZUM ÜBERPRÜFEN VON DEREN FUNKTIONSFÄHIGKEIT**
TANK VENTILATION SYSTEM FOR A MOTOR VEHICLE AND PROCESS AND DEVICE FOR TESTING ITS EFFICIENCY
SYSTEME D'AERATION DU RESERVOIR D'UN VEHICULE A MOTEUR, PROCEDE ET DISPOSITIF DE CONTROLE DE SON FONCTIONNEMENT

(30) Priorität: 11.07.1991 DE 4122975
(43) Veröffentlichungstag der Anmeldung: 30.06.1993
(73) Patentinhaber: ROBERT BOSCH GMBH, 70442 Stuttgart (DE)
(72) Erfinder: DENZ, Helmut, D-7000 Stuttgart 1 (DE); WILD, Ernst, D-7141 Oberriexingen (DE); BLUMENSTOCK, Andreas, D-7140 Ludwigsburg (DE)
(86) Internationale Anmeldenummer: DE9200504
(87) Internationale Veröffentlichungsnummer: WO9301405

(56) Entgegenhaltungen:
- DE-A- 4 003 751
- DE-C- 4 012 111

## Beschreibung

Das Folgende betrifft eine Tankentlüftungsanlage für ein Kraftfahrzeug sowie ein Verfahren und eine Vorrichtung zum Überprüfen der Funktionsfähigkeit einer solchen Anlage.

### Stand der Technik

Eine Tankentlüftungsanlage weist typischerweise folgende Bauteile auf:
- einen Tank mit Tankverschlußeinrichtung;
- ein Adsorptionsfilter mit einer Belüftungsleitung;
- ein Tankentlüftungsventil;
- eine Tankanschlußleitung zwischen dem Tank und dem Adsorptionsfilter; und
- eine Ventilleitung zwischen dem Adsorptionsfilter und dem Tankentlüftungsventil.

Das Tankentlüftungsventil ist mit dem Saugrohr eines Verbrennungsmotors verbunden, damit mit Hilfe des Unterdrucks im Saugrohr Kraftstoffdampfe aus der Tankentlüftungsanlage abgesaugt werden. Dabei wird das Adsorptionsfilter durch Luft regeneriert, die über die Belüftungsleitung zugeführt wird.

Es besteht die Gefahr, daß Tankentlüftungsanlagen undicht werden oder Verstopfungen entstehen. Derartige Anlagen sind daher während des Betriebs eines Kraftfahrzeugs wiederholt auf Funktionsfähigkeit zu überprüfen.

Das wichtigste Verfahren zum überprüfen der Funktionsfähigkeit einer Kraftfahrzeug-Tankentlüftungsanlage beruht auf einem Vorschlag der kalifornischen Umweltbehörde CARB. Nach diesem Verfahren wird zum öffnen des Tankentlüftungsventils überprüft, ob ein Lambdaregler eine Korrektur in seinem Stellwert in Richtung eines mageren Gemisches vornehmen muß. Dies ist immer dann der Fall, wenn aus der Tankentlüftungsanlage Luft mit Kraftstoffdampf angesaugt wird. Nun ist es jedoch so, daß das Adsorptionsfilter ganz regeneriert sein kann und daß der Kraftstoff im Tank völlig entgast ist. Dann wird beim öffnen des Tankentlüftungsventils kein Kraftstoff zusätzlich zu demjenigen geliefert, der gemäß dem Stellwert der Lambdaregelung an die Einspritzventile der Brennkraftmaschine geliefert wird. In diesem Fall muß der Lambdaregler keine Korrektur vornehmen, und es ist unklar, ob die Tankentlüftungsanlage undicht ist oder aus den eben genannten Gründen kein Kraftstoff geliefert wird. Um diese Frage entscheiden zu können, erfolgt gemäß dem bekannten Verfahren eine Ausscheidung des Signals vom Lambdaregler nur dann, wenn ein Kraftstofftemperaturfühler das überschreiten einer vorgegebenen Mindesttemperatur des Kraftstoffs im Tank anzeigt und ein Tankfüllstandssensor meldet, daß das Fahrzeug betankt wurde. Es wird davon ausgegangen, daß dann auf jeden Fall Kraftstoffdampf in der Anlage vorhanden sein müßte, der beim öffnen des Tankentlüftungsventils abgesaugt wird und zu einer Korrektur durch den Lambdaregler führt. Jedoch treten bei diesem Verfahren immer wieder Fehlentscheidungen auf, wenn sich nämlich ausgegaster Kraftstoff im Tank befindet, ebensolcher Kraftstoff nachgetankt wird und das Adsorptionsfilter weitgehend regeneriert ist.

In der nicht vorveröffentlichten DE-A-40 03 751 ist eine Tankentlüftungsanlage beschrieben, die in der Belüftungsleitung des Adsorptionsfilters ein steuerbares Absperrventil aufweist. Dieses Absperrventil ermöglicht es, ein Verfahren auszuführen, bei dem das Absperrventil geschlossen, das Tankentlüftungsventil geöffnet und dann überprüft wird, ob sich im Tank ein Unterdruck aufbaut. Ist dies der Fall, wird auf Funktionsfähigkeit der Anlage geschlossen.

Beim eben genannten Verfahren kann es zu Fehlentscheidungen kommen, wenn der Kraftstoff besonders stark gast. Außerdem ist es erforderlich, einen besonderen Prüfzyklus mit geschlossenem Absperrventil auszuführen, bei dem das Adsorptionsfilter nicht regeneriert werden kann.

Es bestand demgemäß das Problem, ein besonders zuverlässiges Verfahren zum überprüfen der Funktionsfähigkeit der Tankentlüftungsanlage für ein Kraftfahrzeug anzugeben, wie auch eine Vorrichtung zum Ausführen eines solchen Verfahrens und eine Tankentlüftungsanlage, deren Funktionsfähigkeit sich besonders umfangreich und zuverlässig prüfen läßt.

### Darstellung der Erfindung

Das erfindungsgemäße Verfahren zum Feststellen der Funktionsfähigkeit einer Tankentlüftungsanlage der oben genannten Art ist durch folgende Schritte gekennzeichnet:
- Bilden einer ersten Eingangsgröße für eine Kreuzkovarianzanalyse durch Hochpaßbehandlung des Signals für den Volumenstrom durch das Tankentlüftungsventil;
- Bilden der zweiten Eingangsgröße für die Kreuzkovarianzanalyse durch Hochpaßbehandlung des Signals für die Tankdruckdifferenz, d. h. den Unterschied zwischen dem Druck im Tank und dem Umgebungsdruck;
- Bestimmen des Maximums oder des Mittelwerts der Kreuzkovarianzfunktion betreffend das Produkt aus den beiden Eingangsgrößen;
- Bilden eines Maßes für die Varianz der ersten Eingangsgröße;
- Berechnen eines Übertragungsbeiwertes durch Teilen des Maximums oder des Mittelwerts der Kreuzkovarianzfunktion durch das genannte Maß für die Varianz der ersten Eingangsgröße; und
- Untersuchen, ob der Übertragungsbeiwert in einem vorgegebenen Wertebereich liegt, und falls dies der Fall ist, Beurteilen der Tankentlüftungsanlage als funktionsfähig, andernfalls als funktionsunfähig.

Die erfindungsgemäße Vorrichtung weist für jeden vorstehend genannten Verfahrensschritt eine Einrichtung auf, die so ausgebildet ist, daß sie den jeweiligen Verfahrensschritt ausführt.

Die erfindungsgemäße Tankentlüftungsanlage weist die oben aufgezählten Merkmale für eine bekannte Tankentlüftungsanlage auf und ist dadurch gekennzeichnet, daß
- am Adsorptionsfilter eine Belüftungsdrossel vorhanden ist;
- die Belüftungsleitung des Adsorptionsfilters bis zur Tankverschlußeinrichtung geführt ist und so an dieser angebracht ist, daß sie in verschlossenem Zustand derselben geschlossen wird; und
- eine Vorrichtung nach Anspruch 11 vorhanden ist.

Das erfindungsgemäße Verfahren nutzt die Erkenntnis, daß beim Betreiben einer Tankentlüftungsanlage während der Tankentlüftungsphasen fast dauernd Änderungen im Volumenstrom durch das Tankentlüftungsventil stattfinden. Mit diesen Volumenströmen müssen Tankdruckänderungen korrelieren. Andererseits können Tankdruckänderungen auch durch andere Effekte hervorgerufen werden, z. B. durch Schwappen des Tankinhalts bei Kurvenfahrt und dadurch hervorgerufene plötzliche Gasentwicklung, jedoch sind diese Druckänderungen nicht mit den Volumenströmen durch das Tankentlüftungsventil korrelierend. Durch eine Kreuzkorrelationsanalyse oder noch besser, wie bei der Erfindung, durch eine Kreuzkovarianzanalyse muß demgemäß feststellbar sein, ob Tankdruckänderungen durch Volumenstromänderungen hervorgerufen sind, was ein Zeichen für Funktionsfähigkeit der Anlage ist.

Um Eingangsgrößen für die Kreuzkovarianzanalyse zu gewinnen, werden die Signale für den Volumenstrom und die Tankdruckdifferenz, d. h. den Unterschied zwischen dem Druck im Tank und dem Umgebungsdruck jeweils einer Hochpaßbehandlung unterworfen. Diese erfolgt vorzugsweise dadurch, daß der Mittelwert des jeweiligen Signals gebildet wird und dieser Mittelwert vom jeweils aktuellen Signalwert abgezogen wird. Dadurch schwanken die Eingangsgrößen um den jeweiligen Mittelwert, wie dies für die Eingangsgrößen einer Kreuzkovarianzanalyse erforderlich ist.

Der Volumenstrom durch das Tankentlüftungsventil kann unmittelbar gemessen werden, jedoch ist es vorteilhafter, ihn mit Hilfe der am Tankentlüftungsventil herrschenden Druckdifferenz, einer Druckdifferenz-Volumenstrom-Kennlinie und dem Tastverhältnis der Ansteuerung des Tankentlüftungsventiis zu bestimmen. Die Druckdifferenz kann entweder gemessen werden, oder sie kann, was wiederum vorteilhafter ist, als Differenz zwischen dem Umgebungsdruck und dem Saugrohrdruck bestimmt werden. Der Saugrohrdruck kann entweder gemessen werden, oder vorzugsweise, aus einem Lastsignal bestimmt werden. Der Umgebungsdruck kann in guter Näherung als konstant angenommen werden, jedoch kann auch er gemessen werden oder mit Hilfe von Ersatzgrößen bestimmt werden.

Beim Bilden der Kreuzkovarianz wird ein Produkt aus einer Druckdifferenz und einer Volumenstromdifferenz gebildet, das integriert wird. Vorzugsweise wird die Integration durch eine Tiefpaßfilterung ersetzt. Wird der erhaltene Wert durch die Varianz der Volumenstromdifferenz geteilt, also durch das integrierte oder, vorzugsweise, tiefpaßgefilterte Quadrat der Volumenstromdifferenz, ergibt sich als Übertragungsbeiwert eine Größe, die zum Ausdruck bringt, wie weit sich der Druck im Tank bei einer Änderung des Volumenstromes ändert.

Der Wert der Kreuzkovarianzfunktion betreffend das Produkt aus den beiden Eingangsgrößen wird dann maximal, wenn Werte der beiden Eingangsgrößen gerade mit demjenigen zeitlichen Versatz miteinander multipliziert werden, der der Phasenverschiebung zwischen den beiden Signalen entspricht. Es muß also die jeweils aktuelle Tankdifferenzdruckdifferenz mit einer zurückliegenden Volumenstromdifferenz multipliziert werden. Derartige zurückliegende Werte müssen über einen Zeitbereich gespeichert werden, der zwischen der minimal möglichen und der maximal möglichen Phasenverschiebung liegt.

Ist ein Füllstandssensor am Tank vorhanden, läßt sich die Phasenverschiebung mit Hilfe einer Füllstands-Phasenverschiebungs-Kennlinie feststellen. Von den gespeicherten Volumenstromdifferenzen wird dann diejenige zur Multiplikation mit der aktuellen Tankdifferenzdruckdifferenz ausgewählt, die gerade die festgestellte Phasenverschiebung aufweist. Ist dagegen kein Füllstandssensor vorhanden, ist es vorteilhafter, alle gespeicherten Volumenstromdifferenzen mit der jeweils aktuellen Tankdifferenzdruckdifferenz zu multiplizieren und alle Produkte tiefpaßzufiltern. Die so erhaltenen Werte sind für die Kreuzkovarianzfunktion repräsentativ. Aus ihnen kann leicht der Maximalwert ausgewählt werden.

Es ist ersichtlich, daß die Einzelwerte der Kreuzkovarianzfunktion nicht nur von der Kovarianz zwischen den beiden Eingangsgrößen abhängen, sondern auch vom Absolutwert der Größen. Nun hängt der Absolutwert der Tankdifferenzdruckdifferenz unter anderem davon ab, ob die Tankentlüftungsanlage leckt oder ob sie verstopft ist. Hiervon wird die gesamte Kreuzkovarianzfunktion betroffen. Dies hat zur Folge, daß zum Bilden des Übertragungsbeiwertes nicht nur das Maximum der Kreuzkovarianzfunktion verwendet werden kann, sondern auch ihr Mittelwert. Jedoch liefert das Maximum nach der Theorie der Kreuzkovarianzanalyse genauere Ergebnisse.

Das Ergebnis der Kreuzkovarianzanalyse wird um so genauer, je breitbandiger die zeitlichen Änderungen des Volumenstroms durch das Tankentlüftungsventil sind. Für Anwendungsfälle, bei denen das im natürlichen Betrieb auftretende Volumenstromsignal keine ausreichende Frequenzbandbreite aufweist, ist es von Vorteil, das Tastverhältnis des Tankentlüftungsventils in zufälliger Weise zu ändern. Dies kann dauernd geschehen oder auch nur dann, wenn der Absolutmittelwert der Volumenstromdifferenzen unter einen Schwellwert fällt, was anzeigt, daß kaum mehr Änderungen auftreten, mit denen Änderungen im Tankdifferenzdruck korrelieren könnten. Allerdings hat es nur Sinn, diese Änderungen des Tastverhältnisses vorzunehmen, wenn der Saugrohrdruck so gering ist, daß die Änderungen des Tastverhältnisses auch tatsächlich zu Volumenstromänderungen führen. Ob dies der Fall ist, kann entweder unmittelbar mit Hilfe des Saugrohrdrucks oder mit Hilfe eines tieferen Schwellwertes für den Absolutmittelwert der Volumenstromdifferenz entschieden werden.

Damit das erfindungsgemäße Verfahren und die erfindungsgemäße Vorrichtung zum Beurteilen der Funktionsfähigkeit einer Tankentlüftungsanlage ordnungsgemäß arbeiten, muß gewährleistet sein, daß sich Änderungen des Volumenstromes durch das Tankentlüftungsventil möglichst gut in den Tank fortpflanzen. Dies ist insbesondere dann der Fall, wenn das Tankentlüftungsventil unmittelbar mit dem Tank verbunden ist und das Adsorptionsfilter nur über eine Verbindungsleitung an die genannte Leitung angeschlossen ist. Ist dagegen die Tankanschlußleitung relativ weit in das Adsorptionsfilter eingeführt und ist dieses mit seiner Saugseite gesondert mit dem Tankentlüftungsventil verbunden ist es möglich, daß sich Druckänderungen auf der Saugseite, hervorgerufen durch Volumenstromänderungen, kaum auf den Tankdruck auswirken. Jedoch läßt sich auch in diesem Fall der Meßeffekt erhöhen, wenn eine eng gedrosselte Belüftungsleitung verwendet wird.

Wird eine gedrosselte Belüftungsleitung verwendet, besteht an Fahrzeugen mit interner Kraftstoffrückgewinnung beim Betanken das Problem, daß beim Betanken nicht ausreichend Luft durch die Belüftungsleitung entweichen kann. Es ist in diesem Fall von Vorteil, wenn das Adsorptionsfilter zusätzlich zur Belüftungsdrossel noch eine Belüftungsleitung aufweist, die während des Betankens geöffnet werden kann, jedoch im Normalbetrieb der Tankentlüftungsanlage verschlossen ist. In besonders vorteilhafter Weise ist diese Belüftungsleitung bis zur Tankverschlußeinrichtung geführt, und letztere ist so ausgebildet, daß sie in verschlossenem Zustand die Belüftungsleitung schließt. Damit ist automatisch gewährleistet, daß die Belüftungsleitung beim Betanken geöffnet ist. Wird der Verschluß nach dem Tanken nicht mehr betätigt, hat dies zur Folge, daß die Belüftungsleitung offenbleibt, was seinerseits zur Folge hat, daß selbst bei größeren Volumenströmen durch das Tankentlüftungsventil kaum ein Unterdruck im Tank entsteht, so daß die Kreuzkovarianzanalyse sehr geringe Übertragungsbeiwerte liefert, was anzeigt, daß die Anlage undicht ist.

### Zeichnung

Fig. 1: schematische Darstellung einer Tankentlüftungsanlage mit einer Vorrichtung zum Feststellen von deren Funktionsfähigkeit;
Fig. 2: schematische Darstellung einer Tankverschlußeinrichtung mit geöffnetem Tankverschluß, an welcher Einrichtung die Belüftungsleitung für das in Fig. 1 enthaltene Adsorptionsfilter endet;
Fig. 3: Blockfunktionsdiagramm für die in Fig. 1 enthaltene Vorrichtung zum Feststellen der Funktionsfähigkeit der Tankentlüftungsanlage;
Fig. 4: Blockfunktionsdiagramm zum Erläutern, wie die Eingangsgrößen für die beim Funktionsablauf gemaß Fig. 3 vorgenommene Kreuzkovarianzanalyse gewonnen werden;
Fig. 5: Blockfunktionsdiagramm zum Erläutern, wie die Varianz einer der Eingangsgrößen bestimmt wird;
Fig. 6: Blockfunktionsdiagramm zum Erläutern, wie der Maximal- oder Mittelwert einer Kreuzkovarianzfunktion im Ablauf gemaß Fig. 3 bestimmt wird;
Fig. 7: Blockfunktionsdiagramm entsprechend dem von Fig. 6, jedoch für eine andere Variante zum Bestimmen eines Mittelwerts in Zusammenhang mit einer Kreuzkovarianzanalyse; und
Fig. 8: Blockfunktionsdiagramm entsprechend dem von Fig. 6, jedoch für eine andere Variante zum Bestimmen des Maximalwerts der Kreuzkovarianzfunktion.

Es wird darauf hingewiesen, daß alle Blockfunktionsdigramme entweder als Blockdiagramm für eine Vorrichtung oder als Ablaufdiagramm für ein Verfahren verstanden werden können.

### Beschreibung von Ausführungsbeispielen

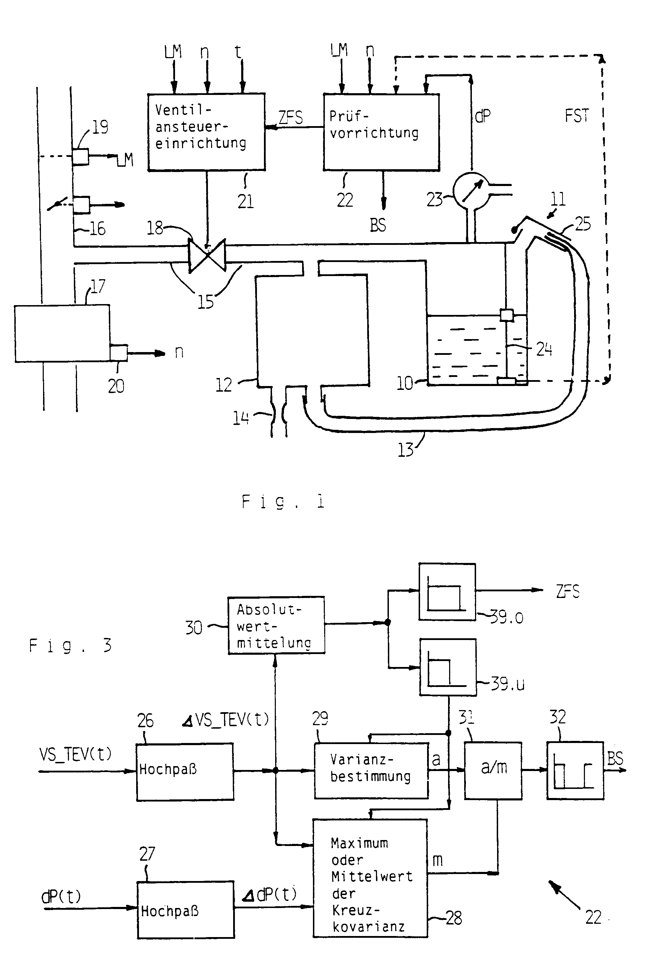

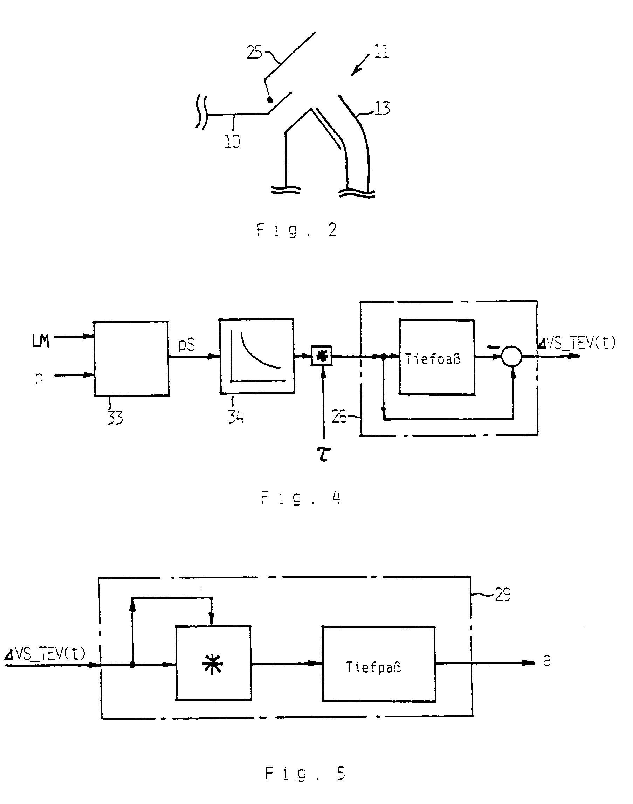

Die Darstellung von Fig. 1 enthält eine Tankentlüftungsanlage mit einem Tank 10 mit Tankverschlußeinrichtung 11, einem mit dem Tank verbundenen Adsorptionsfilter 12 mit Belüftungsleitung 13 und Belüftungsdrossel 14 sowie eine Ventilleitung 15 zum Saugrohr 16 eines Verbrennungsmotors 17, in die ein Tankentlüftungsventil 18 eingesetzt ist. Im Saugrohr befindet sich ein Hitzdraht-Luftmassenmesser 19, der ein Luftmassensignal LM ausgibt. Ein Drehzahlmesser 20 am Motor 17 bestimmt die Drehzahl n desselben.

Das Tankentlüftungsventil 18 wird von einer Ventilsteuereinrichtung 21 mit einem Tastverhältnis angesteuert, das von der Zeit t und der Last des Motors abhängt, die aus den Werten LM und n bestimmt wird. Die zeitliche Abhängigkeit besteht darin, daß Tankentlüftung nur während sogenannten Tankentlüftungsphasen zugelassen wird. Dauernde Tankentlüftung ist nicht zulässig, da durch die Tankentlüftung die Lambdaregelung beeinflußt wird, diese jedoch ohne den unbekannten Einfluß der Tankentlüftung adaptiert werden muß. Typischerweise betragen die Adaptionsphasen und die Tankentlüftungsphasen jeweils einige Minuten.

Zum überprüfen der Funktionsfähigkeit der Tankentlüftungsanlage ist eine Prüfvorrichtung 22 vorhanden, die ein Beurteilungssignal BS ausgibt, das das Ergebnis der Prüfung anzeigt. Die Prüfvorrichtung 22 erhält ein Differenzdrucksignal dP von einem am Tank 10 angebrachten Differenzdrucksensor 23, der die Differenz zwischen dem Druck im Tank und dem Umgebungsdruck mißt. Weiterhin erholt die Prüfvorrichtung 22 zum Bestimmen des Drucks im Saugrohr 16 ein Lastsignal, hier wiederum repräsentiert durch die Werte der Luftmasse LM und der Drehzahl n, sowie wahlweise ein Füllstandssignal FST von einem Füllstandssensor 24 im Tank.

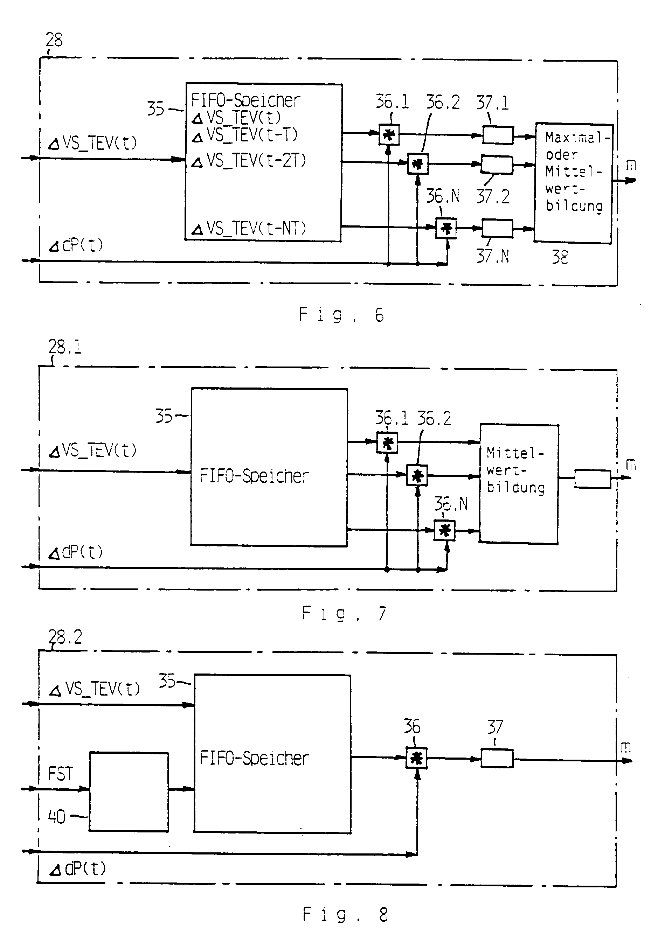

Aus den Fig. 1 und 2 ist ersichtlich, daß die Belüftungsleitung 13 durch den Tankverschluß 25 verschlossen wird, solange der Deckel selbst geschlossen ist (Fig. 1), diese Leitung dagegen bei geöffnetem Verschluß (Fig. 2) offen ist. Der Zweck dieser Anordnung wird weiter unten erläutert.

Anhand von Fig. 3 wird nun die grundsätzliche Funktion der Prüfeinrichtung 22 beschrieben.

In einer ersten Eingangsgrößenbestimmungseinrichtung 26 wird das Signal VS_TEV(t) für den Volumenstrom durch das Tankentlüftungsventil 18 einer Hochpaßbehandlung unterzogen. Entsprechend wird in einer zweiten Eingangsgrößenbestimmungseinrichtung 27 das Differenzdrucksignal dP(t) vom Differenzdrucksensor 23 einer entsprechenden Hochpaßbehandlung unterzogen. Dadurch werden Eingangsgrößen ΔVS_TEV(t) bzw;. ΔdP(t) für eine Kreuzkovarianzanalyse erhalten, die in einer Kreuzkovarianzeinrichtung 28 ausgeführt wird. Die erste Eingangsgröße wird zudemhin einer Varianzbestimmungseinrichtung 29 sowie einer Einrichtung 30 zum Bestimmen des Mittelns der Absolutwerte der ersten Eingangsgröße zugeführt. In einem Quotientenbildner 31 wird die Varianz der ersten Eingangsgröße durch das Maximum oder den Mittelwert der Kreuzkovarianzfunktion betreffend die beiden Eingangsgrößen geteilt, wie er von der Kreuzkovarianzeinrichtung 28 ausgegeben wird. Der erhaltene Quotient wird in einer Entscheidungseinrichtung 32 mit einem unteren und einem oberen Schwellwert für den Quotienten verglichen. Ist der untere Schwellwert unter-schritten oder der obere Schwellwert überschritten, wird als Beurteilungssignal BS der Wert "1" ausgegeben, was anzeigt, daß die Tankentlüftungsanlage nicht funktionsfähig ist. Andernfalls wird der Wert "0" ausgegeben.

Die genannte Hochpaßbehandlung der Signale VS_TEV(t) und dP(t) wird nun anhand von Fig. 4 veranschaulicht. Dort ist nur die als Hochpaß wirkende erste Eingangsgrößenbestimmungseinrichtung 26 dargestellt, jedoch wirkt die Einrichtung 27 zum Bestimmen der zweiten Eingangsgröße entsprechend. Der ersten Bestimmungseinrichtung 26 wird das Volumenstromsignal VS_TEV(t) zugeführt, dieses wird in einem Tiefpaß gemittelt, und in einer Additionsstelle wird der Volumenstrom-Mittelwert vom aktuellen Volumenstrom abgezogen, wodurch die Volumenstromdifferenz ΔVS_TEV(t) als erste Eingangsgröße gewonnen ist.

Beim Ausführungsbeispiel wird der Volumenstrom durch das Tankentlüftungsventil 18 wie folgt bestimmt. Aus einem Last-Saugrohrdruck-Kennfeld 33 wird der Saugrohrdruck pS abhängig von der Last des Motors 17 bestimmt. Bei der Darstellung gemäß Fig. 4 werden als Lastinformation Werte des Luftmassensignals LM und der Drehzahl n verwendet. Mit Hilfe einer Druckdifferenz-Volumenstrom-Kennlinie 34 wird aus dem Saugrohrdruck der Volumenstrom durch das Tankentlüftungsventil bestimmt, wie er bei ganz geöffnetem Ventil und konstantem Druck auf der dem Tank zugewandten Seite des Tankentlüftungsventils gilt. Die letztere Bedingung ist relativ gut erfüllt, da der Druck auf der genannten Seite immer im wesentlichen dem Luftdruck entspricht, der beim Ausführungsbeispiel als konstant angenommen wird. Schließlich wird der so bestimmte Volumenstrom noch in einer Multiplikationsstelle mit dem Tastverhältnis τ des Tankentlüftungsventils modifiziert, um dadurch den tatsächlichen Volumenstrom VS_TEV(t) zu erhalten. Dieser Ablauf kann vereinfacht werden, wenn entweder der Saugrohrdruck gemessen wird oder gar der Volumenstrom durch das Tankentlüftungsventil unmittelbar mit einem Durchflußmesser bestimmt wird.

Fig. 5 veranschaulicht die typische Funktion einer Varianzbestimmung. Es wird nämlich die Eingangsgröße, hier die Volumenstromdifferenz ΔVS_TEV(t) quadriert und dann integriert. Beim bevorzugten Ausführungsbeispiel wird statt der Integration eine Tiefpaßfilterung durch einen Tiefpaß TP vorgenommen.

Als Funktion der Kreuzkovarianzeinrichtung 28 ist diejenige bevorzugt, wie sie durch Fig. 6 veranschaulicht ist. Alternativen werden anhand der Fig. 7 und 8 erläutert.

Gemäß Fig. 6 werden in einem FIFO-Speicher 35 in vorgegebenen Zeitabständen T aufeinanderfolgend Werte für die Volumenstromdifferenz ΔVS_TEV(t) abgelegt, und zwar so viele, daß der größte Zeitversatz N · T gerade der maximal möglichen Phasenverschiebung zwischen einer Änderung des Volumenstroms und einer Änderung des Tankdifferenzdrucks entspricht. Mit jedem neu aufgenommenen Wert fällt der älteste Wert aus dem Speicher. Die abgespeicherten Werte werden bis auf den aktuellen alle in Multiplikationsstellen 36.1 bis 36.n jeweils mit der aktuellen Tankdifferenzdruckdifferenz ΔdP(t) multipliziert, wie sie von der ersten Eingangsgrößenbestimmungseinrichtung 27 ausgegeben wird. Die aktuelle Volumenstromdifferenz erfährt keine Multiplikation, da beim Ausführungsbeispiel die minimal möglich genannte Phasendifferenz nicht Null ist, sondern mindestens der Zeitspanne entspricht, mit der aufeinanderfolgende Differenzwerte in den Speicher aufgenommen werden. Jedes der einzelnen Produkte wird in einem anschließenden Tiefpaßfilter (TP) 37.1 bis 37.N tiefpaßgefiltert (idealerweise sollte eine Integration über den gesamten Meßzeitraum erfolgen), wodurch die einzelnen Werte einer Kreuzkovarianzfunktion gebildet werden. Von diesen Werten wird dann der Maximalwert oder der Mittelwert bestimmt, was in einer Einrichtung 38 erfolgt.

Bevor Varianten des bevorzugten Ausführungsbeispiels erläutert werden, sei zunächst der zeitliche Gesamtablauf beschrieben.

Für die Ausgangsgrößen, also den Volumenstrom VS_TEV(t) und den Tankdifferenzdruck dP(t) werden Meßwerte alle 30 msec gebildet. Die beschriebene Tiefpaßfilterung erfolgt durch gleitende Mittelwertbildung, gemäß der der jeweils vorangehende Mittelwert mit etwa 99 %, vorzugweise mehr, und der neue Wert mit dem Rest auf 100 % gewichtet wird. Dies entspricht einer Zeitkonstanten von etwa 5 Sekunden. Die auf diese Weise gebildete Volumenstromdifferenz ΔVS_TEV(t) wird alle 500 msec in den FIFO-Speicher 35 eingeschrieben, der insgesamt 30 Werte faßt, was bedeutet, daß der älteste noch enthaltene Wert 15 Sekunden alt ist. Dies entspricht der Phasenverschiebung bei der Tankentlüftungsanlage des Ausführungsbeispiels bei fast leerem Tank. Bei vollem Tank beträgt die Phasenverschiebung nur etwa 500 msec. Für alle Phasenverschiebungen wird mit Hilfe der Multiplikationsstellen 36.1 bis 36.n die Kreuzkovarianz zur Tankdifferenzdruckdifferenz ΔdP(t) berechnet und dann tiefpaßgefiltert. Diese Filterung erfolgt beim Ausführungsbeispiel mit einer Zeitkonstanten von 6 Minuten, was bedeutet, daß bei einer Berechnung alle 500 msec der jeweils neue Wert nur immer mit etwa 1 %o im Verhältnis zum alten Mittelwert berücksichtigt wird. Welcher tiefpaßgefilterte Wert der größte ist, hängt vom jeweiligen Füllungsgrad des Tanks ab.

Mit einer Zeitkonstanten von ebenfalls 6 Minuten erfolgt die gleitende Mittelwertbildung im Tiefpaß in der Varianzbestimmungseinrichtung 29. Wird der hierbei erhaltene Wert durch die Ausgangsgröße der Kreuzkovarianzeinrichtung 28 geteilt, ergibt sich ein Übertragungsbeiwert, der angibt, wie groß Tankdifferenzdruckänderungen bei vorgegebenen Volumenstromänderungen sein müssen. Durch Versuche läßt sich der Übertragungsbeiwert für eine ordnungsgemäß funktionierende Tankentlüftungsanlage bestimmen. Mit Hilfe des hierbei ermittelten Übertragungsbeiwerts werden ein etwas tiefer liegender unterer Schwellwert und ein etwa höher liegender oberer Schwellwert bestimmt. Wird der untere Schwellwert unterschritten, zeigt dies an, daß die Tankentlüftungsanlage wegen einem Leck nicht funktionsfähig ist. Wird der obere Schwellwert überschritten, zeigt dies fehlende Funktionsfähigkeit wegen einer Verstopfung des Adsorptionsfilters an. In diesem Fall sind nämlich die Druckänderungen im Tank bei Volumenstromänderung durch das Tankentlüftungsventil stärker als sie es eigentlich sein dürften.

Kreuzkovarianzen lassen sich nur dann sinnvoll bilden, wenn überhaupt Volumenstromänderungen vorhanden sind, die Druckänderungen im Tank hervorrufen können. Sind die Volumenstromänderungen zu klein, ist es daher von Vorteil, die vorstehend beschriebene Auswertung anzuhalten. Zu diesem Zweck wird das Ausgangssignal der Absolutwertmittelung 30 einer ersten Schwellenprüfeinrichtung 39.u zugeführt, die überprüft, ob der Mittelwert der Absolutwerte der Volumenstromänderungen unter einen unteren Schwellwert gefallen ist. Ist dies der Fall, wird ein Signal zum Beibehalten der jeweils letzten Werte an die Varianzbestimmungseinrichtung 29 und die Kreuzkovarianzeinrichtung 28 gegeben.

Um den eben genannten Fall möglichst zu vermeiden, daß nämlich das Verfahren zum Feststellen der Funktionsfähigkeit der Tankentlüftungsanlage angehalten werden muß, wird das Ausgangssignal von der Absolutwertmittelung 30 noch einer zweiten Schwellenprüfeinrichtung 39.o zugeführt. Diese gibt ein Signal ZFS zum Erzeugen eines zufälligen Tastverhältnisses τ an die Ventilsteuereinrichtung 21 aus, sobald der genannte Schwellwert unterschritten ist. Die Ventilsteuereinrichtung 21 erzeugt dieses zufällige Tastverhältnis jedoch nur dann, wenn sie mit Hilfe des Lastsignales feststellt, daß dies wegen ausreichend niedrigem Saugrohrdruck auch tatsächlich Sinn hat und wenn sie darüber hinaus aus Betriebszustandsdaten des Motors 17 feststellt, daß dieser in einem Betriebsbereich läuft, in dem dauernde Änderungen des Tastverhältnisses nicht stören.

Um nicht nur bei den vorstehend genannten Bedingungen ein möglichst breitbandiges Volumenstromänderungssignal zu erhalten, sondern um ein solches Signal möglichst immer vorliegen zu haben, kann ein zufälliges Tastverhältnis grundsätzlich immer eingestellt werden, solange ein Betriebsbereich des Motors vorliegt, in dem die Änderungen des Tastverhältnisses nicht stören. Es muß allerdings darauf geachtet werden, daß der zeitliche Mittelwert des Tastverhältnisses in etwa mit demjenigen Tastverhältnis übereinstimmt, das bei herkömmlichem Betrieb von der Ventilsteuereinrichtung im jeweiligen Betriebszustand eingestellt würde.

Anhand von Fig. 7 wird nun eine Vereinfachung des Ausführungsbeispiels von Fig. 6 erläutert. Gemäß Fig. 7 erfolgt direkt nach dem Bilden der Produkte in den Multiplikationsstellen 36.1 bis 36.n eine Mittelwertbildung und dann eine Tiefpaßfilterung dieses Mittelwertes, anstatt daß erst die Produkte tiefpaßgefiltert werden und dann der Mittelwert bestimmt wird. Dadurch werden alle Tiefpaßfilter bis auf einen eingespart. Das so erhaltene Ausgangssignal aus der Kreuzkovarianzeinrichtung 28.1 gemäß Fig. 7 ist jedoch weniger zuverlässig als das aus der Kreuzkovarianzeinrichtung 28 gemäß Fig. 6, da die korrekte Bestimmung der Kreuzkovarianzfunktion erst die Tiefpaßfilterung erfordert.

Gleich zuverlässig wie die Kreuzkovarianzeinrichtung 28 gemäß Fig. 6, jedoch mit weniger Rechenaufwand aber dafür mit dem Erfordernis eines Füllstandssensors 24, arbeitet die Kreuzkovarianzeinrichtung 28.2 gemäß Fig. 8. Auch diese weist den anhand von Fig. 6 beschriebenen FIFO-Speicher 35 auf. Aus diesem wird jedoch immer nur der Wert zur Multiplikation mit der Tankdifferenzdruckdifferenz ΔdP(t) ausgelesen, der genau die aktuelle Phasenverschiebung zur genannten Druckdifferenz aufweist. Diese Phasenverschiebung wird mit Hilfe einer Füllstands-Phasenverschiebungs-Kennlinie 40 erhalten, die für jeden Füllstand des Tanks die zugehörige Phasenverschiebung zwischen Volumenstromänderung und Tankdruckänderung ausgibt. Der ausgelesene Wert wird nach der genannten Multiplikation in einem einzigen Tiefpaß 37 gefiltert. Es entfallen also die Multiplikationsstellen bis auf eine, die Tiefpaßfilter bis auf einen und die Bestimmungseinrichtung 38 für den Maximalwert der Kreuzkorrelationsfunktion.

## Patentansprüche

1. Verfahren zum Feststellen der Funktionsfähigkeit einer Tankentlüftungsanlage an einem Kraftfahrzeug mit einem Verbrennungsmotor, welche Tankentlüftungsanlage ein Adsorptionsfilter aufweist, das über eine Tankanschlußleitung mit einem Tank verbunden ist und über eine Ventilleitung mit zwischengeschaltetem Tankentlüftungsventil an das Saugrohr des Verbrennungsmotors angeschlossen ist, **gekennzeichnet durch** folgende Schritte:
- Bilden einer ersten Eingangsgröße für eine Kreuzkovarianzanalyse durch Hochpaßbehandlung des Signals für den Volumenstrom durch das Tankentlüftungsventil;
- Bilden der zweiten Eingangsgröße für die Kreuzkovarianzanalyse durch Hochpaßbehandlung des Signals für die Tankdruckdifferenz, d. h. den Unterschied zwischen dem Druck im Tank und dem Umgebungsdruck;
- Bestimmen des Maximums oder des Mittelwerts der Kreuzkovarianzfunktion betreffend das Produkt aus den beiden Eingangsgrößen;
- Bilden eines Maßes für die Varianz der ersten Eingangsgröße;
- Berechnen eines Übertragungsbeiwertes durch Teilen des Maximums oder des Mittelwerts der Kreuzkovarianzfunktion durch das genannte Maß für die Varianz der ersten Eingangsgröße; und
- Untersuchen, ob der Übertragungsbeiwert in einem vorgegebenen Wertebereich liegt, und falls dies der Fall ist, Beurteilen der Tankentlüftungsanlage als funktionsfähig, andernfalls als nicht funktionsfähig.

2. Verfahren nach Anspruch 1, **dadurch gekennzeichnet**, daß das Maximum der Kreuzkovarianzfunktion durch folgende Verfahrensschritte festgestellt wird:
- fortlaufendes Berechnen jeweils einer Mehrzahl von Produkten aus dem jeweils aktuellen Wert der zweiten Eingangsgröße und jeweils einem zeitverschobenen Wert der ersten Eingangsgröße, wobei sich die Werte der ersten Eingangsgröße von dem mit der kleinsten möglichen Phasenverschiebung zur ersten Eingangsgröße bis zu dem mit der größtmöglichen Phasenverschiebung erstrecken;
- Berechnen des Kreuzkovarianzfaktors für jede berücksichtigte Phasenverschiebung; und
- Auswählen des Faktors mit dem größten positiven Wert.

3. Verfahren nach Anspruch 1, **dadurch gekennzeichnet**, daß das Maximum der Kreuzkovarianzfunktion durch folgende Verfahrensschritte festgestellt wird:
- Bestimmen des Tankfüllstandes;
- Bestimmen der zu erwartenden Phasenverschiebung zwischen der ersten und der zweiten Eingangsgröße;
- Multiplizieren des jeweils aktuellen Werts der zweiten Eingangsgröße mit dem um die festgestellte Phasenverschiebung zurückliegenden Wert der ersten Eingangsgröße; und
- Mitteln des Multiplikationsergebnisses.

4. Verfahren nach Anspruch 1, **dadurch gekennzeichnet**, daß der Mittelwert der Kreuzkovarianzfunktion durch folgende Verfahrensschritte festgestellt wird:
- fortlaufendes Berechnen jeweils einer Mehrzahl von Produkten aus dem jeweils aktuellen Wert der zweiten Eingangsgröße und jeweils einem zeitverschobenen Wert der ersten Eingangsgröße, wobei sich die Werte der ersten Eingangsgröße von dem mit der kleinsten möglichen Phasenverschiebung zur ersten Eingangsgröße bis zu dem mit der größtmöglichen Phasenverschiebung erstrecken;
- Berechnen des Kreuzkovarianzfaktors für jede berücksichtigte Phasenverschiebung; und
- Berechnen des Mittelwerts der Kreuzkovarianzfaktoren.

5. Verfahren nach Anspruch 1, **dadurch gekennzeichnet**, daß der Mittelwert der Kreuzkovarianzfunktion durch folgende Verfahrensschritte festgestellt wird:
- fortlaufendes Berechnen jeweils einer Mehrzahl von Produkten aus dem jeweils aktuellen Wert der zweiten Eingangsgröße und jeweils einem zeitverschobenen Wert der ersten Eingangsgröße, wobei sich die Werte der ersten Eingangsgröße von dem mit der kleinsten möglichen Phasenverschiebung zur ersten Eingangsgröße bis zu dem mit der größtmöglichen Phasenverschiebung erstrecken;
- Aufsummieren aller Produkte; und
- Mitteln der Produktsumme.

6. Verfahren nach einem der Ansprüche 1 bis 5, **dadurch gekennzeichnet**, daß die Hochpaßbehandlung für den Volumenstrom durch folgende Schritte erfolgt:
- Bilden eines Volumenstrom-Mittelwertes und
- Berechnen der Volumenstromdifferenz zwischen dem jeweils aktuellen Volumenstrom und dem Volumenstrom-Mittelwert.

7. Verfahren nach einem der Ansprüche 1 bis 6, **dadurch gekennzeichnet**, daß die Hochpaßbehandlung für den Tankdifferenzdruck durch folgende Schritte erfolgt:
- Bilden des Mittelwerts für den Tankdifferenzdruck und
- Berechnen der Tankdifferenzdruckdifferenz zwischen jeweils aktuellem Tankdifferenzdruck und Tankdifferenzdruck-Mittelwert.

8. Verfahren nach einem der Ansprüche 1 bis 7, **dadurch gekennzeichnet**, daß das Tastverhältnis des Tankentlüftungsventils durch eine Zusatzfunktion eingestellt wird.

9. Verfahren nach Anspruch 8, **dadurch gekennzeichnet**, daß das Tastverhältnis des Tankentlüftungsventils nur bei Erfülltsein folgender Bedingungen durch eine Zufallsfunktion eingestellt wird:
- der Saugrohrdruck liegt unter einer Druckschwelle;
- das Mittel der absoluten Volumenstromdifferenzwerte fällt unter eine obere Mittelwertschwelle; und
- der Motor läuft in einem Betriebsbereich, in dem dauernde Änderungen des Tastverhältnisses nicht stören.

10. Verfahren nach einem der Ansprüche 1 bis 9, **dadurch gekennzeichnet**, daß alle Verfahrensabläufe in solchen Zeiträumen angehalten werden, in denen das Mittel der Volumenstromdifferenz-Absolutwerte unter eine untere Mittelwertschwelle fällt.

11. Vorrichtung zum Feststellen der Funktionsfähigkeit einer Tankentlüftungsanlage an einem Kraftfahrzeug mit einem Verbrennungsmotor, welche Tankentlüftungsanlage ein Adsorptionsfilter aufweist, das über eine Tankanschlußleitung mit einem Tank verbunden ist und über eine Ventilleitung mit zwischen geschaltetem Tankentlüftungsventil an das Saugrohr des Verbrennungsmotors angeschlossen ist, **gekennzeichnet durch** folgende Funktionsmittel:
- eine erste Eingangsgrößenbestimmungseinrichtung (26) für Hochpaßbehandlung eines Signals für den Volumenstrom durch das Tankentlüftungsventil, zum Bestimmen eines ersten Eingangssignals für eine Kreuzkovarianzanalyse;
- eine zweite Eingangsgrößenbestimmungseinrichtung (27) für Hochpaßbehandlung eines Signals für die Tankdruckdifferenz, d. h. den Unterschied zwischen dem Druck im Tank und dem Umgebungsdruck, zum Bestimmen der zweiten Eingangsgröße für die Kreuzkovarianzanalyse;
- eine Kreuzkovarianzeinrichtung (28) zum Bestimmen des Maximums oder des Mittelwerts der Kreuzkovarianzfunktion betreffend das Produkt aus den beiden Eingangsgrößen;
- eine Varianzbestimmungseinrichtung (29) zum Bilden eines Maßes für die Varianz der ersten Eingangsgröße;
- einen Quotientenbildner (31) zum Berechnen eines Übertragungsbeiwertes durch Teilen des Maximums oder des Mittelwerts der Kreuzkovarianzfunktion durch das genannte Maß für die Varianz der ersten Eingangsgröße; und
- eine Entscheidungseinrichtung zum Untersuchen, ob der Übertragungsbeiwert in einem vorgegebenen Wertebereich liegt, und zum Beurteilen der Tankentlüftungsanlage als funktionsfähig, falls dies der Fall ist, andernfalls zum Beurteilen als nicht funktionsfähig.

12. Tankentlüftungsanlage mit
- einem Tank (10) mit Tankverschlußeinrichtung (11);
- einem Adsorptionsfilter (12);
- einer Tankanschlußleitung zwischen dem Tank und dem Adsorptionsfilter;
- einem Tankentlüftungsventil (18) in
- einer Ventilleitung (15) zwischen dem Adsorptionsfilter und dem Tankentlüftungsventil;
**dadurch gekennzeichnet**, daß
- am Adsorptionsfilter eine Belüftungsdrossel (14) zur Atmosphäre vorhanden ist, und zusätzlich
- eine Belüftungsleitung (13) des Adsorptionsfilters bis zur Tankverschlußeinrichtung geführt ist und so an dieser angebracht ist, daß sie in verschlossenem Zustand der Tankverschlußeinrichtung geschlossen ist; und
- eine Vorrichtung gemäß Anspruch 11 vorhanden ist.

## Claims

1. Method for determining the functional capability of a tank ventilation system on a motor vehicle with an internal combustion engine, which tank ventilation system has an adsorption filter which is connected via a tank connection conduit to a tank and is joined to the induction pipe of the internal combustion engine via a valve conduit with a tank ventilation valve connected between, which method is characterized by the following steps:
- forming a first input parameter for a cross-covariance analysis by high-pass treatment of the signal for the volume flow through the tank ventilation valve;
- forming the second input parameter for the cross-covariance analysis by high-pass treatment of the signal for the tank pressure difference, i.e. the difference between the pressure in the tank and the ambient pressure;
- determining the maximum or the average of the cross-covariance function relating to the product of the two input parameters;
- forming a measure for the variance of the first input parameter;
- calculating a transfer coefficient by dividing the maximum or the average of the cross-covariance function by the measure quoted for the variance of the first input parameter;
and
- investigating whether the transfer coefficient is within a specified value range and, if this is the case, assessing the tank ventilation system as being functionally capable and otherwise assessing it as not being functionally capable.

2. Method according to Claim 1, characterized in that the maximum of the cross-covariance function is determined by the following steps of the method:
- continuing calculation, in each case, of a plurality of products of the respective current value of the second input parameter and a respective time-shifted value of the first input parameter, the values of the first input parameter extending from that with the smallest possible phase-shift relative to the first input parameter to that with the largest possible phase-shift;
- calculating the cross-covariance factor for each phase-shift which has been taken into account;
and
- selecting the factor with the largest positive value.

3. Method according to Claim 1, characterized in that the maximum of the cross-covariance function is determined by the following steps of the method:
- determining the fuel level in the tank;
- determining the phase-shift to be expected between the first and the second input parameters;
- multiplying the respective current value of the second input parameter by the value of the first input parameter previous by the amount of the phase-shift determined;
and
- averaging the result of the multiplication.

4. Method according to Claim 1, characterized in that the average of the cross-covariance function is determined by the following steps of the method:
- continuing calculation, in each case, of a plurality of products of the respective current value of the second input parameter and a respective time-shifted value of the first input parameter, the values of the first input parameter extending from that with the smallest possible phase-shift relative to the first input parameter to that with the largest possible phase-shift;
- calculating the cross-covariance factor for each phase-shift which has been taken into account;
and
- calculating the average of the cross-covariance factors.

5. Method according to Claim 1, characterized in that the average of the cross-covariance function is determined by the following steps of the method:
- continuing calculation, in each case, of a plurality of products of the respective current value of the second input parameter and a respective time-shifted value of the first input parameter, the values of the first input parameter extending from that with the smallest possible phase-shift relative to the first input parameter to that with the largest possible phase-shift;
- adding up all the products;
and
- averaging the product sum.

6. Method according to one of Claims 1 to 5, characterized in that the high-pass treatment for the volume flow takes place by means of the following steps:
- forming a volume flow average and
- calculating the volume flow difference between the respective current volume flow and the volume flow average.

7. Method according to one of Claims 1 to 6, characterized in that the high-pass treatment for the tank differential pressure takes place by means of the following steps:
- forming the average of the tank differential pressure and
- calculating the tank differential pressure difference between the respective current tank differential pressure and the tank differential pressure average.

8. Method according to one of Claims 1 to 7, characterized in that the pulse-duty factor of the tank ventilation valve is set by an additional function.

9. Method according to Claim 8, characterized in that the pulse-duty factor of the tank ventilation valve is only set when the following conditions are satisfied by a random function:
- the induction pipe pressure is below a pressure threshold;
- the average of the absolute volume flow difference values is below an upper average threshold; and
- the engine is running in an operating range in which continuing changes of the pulse-duty factor do not cause any disturbance.

10. Method according to one of Claims 1 to 9, characterized in that all the method cycles are held in periods of time in which the average of the volume flow difference absolute values is below a lower average threshold.

11. Appliance for determining the functional capability of a tank ventilation system on a motor vehicle with an internal combustion engine, which tank ventilation system has an adsorption filter which is connected via a tank connection conduit to a tank and is joined to the induction pipe of the internal combustion engine via a valve conduit with a tank ventilation valve connected between, characterized by the following functional means:
- a first input parameter determination device (26) for high-pass treatment of a signal for the volume flow through the tank ventilation valve in order to determine a first input signal for a cross-covariance analysis;
- a second input parameter determination device (27) for high-pass treatment of a signal for the tank pressure difference, i.e. the difference between the pressure in the tank and the ambient pressure, in order to determine the second input parameter for the cross-covariance analysis;
- a cross-covariance device (28) for determining the maximum or the average of the cross-covariance function relating to the product of the two input parameters;
- a variance determination device (29) for forming a measure for the variance of the first input parameter;
- a quotient former (31) for calculating a transfer coefficient by dividing the maximum or the average of the cross-covariance function by the amount quoted for the variance of the first input parameter;
and
- a decision device for investigating whether the transfer coefficient is within a specified value range and, if this is the case, for assessing the tank ventilation system as being functionally capable and otherwise for assessing it as not being functionally capable.

12. Tank ventilation system having
- a tank (10) with tank closing device (11);
- an adsorption filter (12);
- a tank connection conduit between the tank and the adsorption filter;
- a tank ventilation valve (18) in
- a valve conduit (15) between the adsorption filter and the tank ventilation valve;
characterized in that
- a ventilation throttle (14) to atmosphere is present on the adsorption filter and, in addition,
- a ventilation conduit (13) of the adsorption filter is taken as far as the tank closing device and is attached to the latter in such a way that it is closed in the closed condition of the tank closing device;
and
- an appliance according to Claim 11 is present.

## Revendications

1. Procédé pour déterminer l'aptitude au fonctionnement d'un système d'aération de réservoir sur un véhicule automobile avec un moteur à combustion interne, ce système d'aération de réservoir comportant un filtre d'adsorption, qui est relié à un réservoir par l'intermédiaire d'une canalisation de raccordement au réservoir et qui est raccordé à la tubulure d'aspiration du moteur à combustion interne par l'intermédiaire d'une canalisation de vanne avec intercalation d'une vanne d'aération de réservoir, procédé caractérisé par les étapes suivantes :
- formation d'une première grandeur d'entrée pour une analyse de covariance croisée par traitement passe-haut du signal pour le débit volumique à travers la vanne d'aération du réservoir,
- formation de la seconde grandeur d'entrée pour l'analyse de covariance croisée par traitement passe-haut du signal pour la différence de pression au réservoir, c'est-à-dire la différence entre la pression dans le réservoir et la pression environnante,
- détermination du maximum ou de la valeur moyenne de la fonction de covariance croisée concernant le produit des deux grandeurs d'entrée
- formation d'une mesure pour la variance de la première grandeur d'entrée,
- calcul d'un facteur de correction de transmission par division du maximum ou de la valeur moyenne de la fonction de covariance croisée par la mesure précitée pour la variance de la première grandeur d'entrée,
- rechercher si le facteur de correction de transmission se situe dans une zone de valeurs prédéfinies et si c'est le cas juger que le système d'aération de réservoir est apte à fonctionner et dans l'autre cas qu'il n'est pas apte à fonctionner.

2. Procédé selon la revendication 1, caractérisé en ce que le maximum de la fonction de covariance croisée est déterminé par les étapes suivantes du procédé :
- calcul continu respectivement d'une majorité de produits de la valeur respectivement actuelle de la seconde grandeur d'entrée et respectivement une valeur décalée dans le temps de la première grandeur d'entrée, les valeurs de la première grandeur d'entrée s'étendant de celles avec le décalage de phase le plus petit possible pour la première grandeur d'entrée jusqu'à celle avec le plus grand décalage de phase possible.
- calcul du facteur de covariance croisée pour chaque décalage de phase pris en compte,
- sélection du facteur avec la valeur positive la plus grande.

3. Procédé selon la revendication 1, caractérisé en ce que le maximum de la fonction de covariance croisée est déterminé par les étapes suivantes du procédé :
- détermination du niveau de remplissage du réservoir,
- détermination du décalage de phase à attendre entre la première et la seconde grandeur d'entrée,
- multiplication de la valeur respectivement actuelle de la seconde grandeur d'entrée avec la valeur de la première grandeur d'entrée décalée en arrière du décalage de phase constaté,
- calcul de la moyenne du résultat de la multiplication.

4. Procédé selon la revendication 1, caractérisé en ce que la valeur moyenne de la fonction de covariance croisée est déterminée par les étapes suivantes du procédé:
- calcul continu respectivement d'une majorité de produit de la valeur respectivement actuelle de la seconde grandeur d'entrée et respectivement une valeur décalée dans le temps de la première grandeur d'entrée, les valeurs de la première grandeur d'entrée s'étendant de la valeur avec le décalage de phase le plus petit possible pour la première grandeur d'entrée jusqu'à la valeur avec le décalage de phase le plus grand possible,
- calcul du facteur de covariance croisée pour chaque décalage de phase pris en compte,
- calcul de la valeur moyenne des facteurs de covariance croisée.

5. Procédé selon la revendication 1, caractérisé en ce que la valeur moyenne de la fonction de covariance croisée est déterminée par les étapes suivantes du procédé:
- calcul continu respectivement d'un majorité de produit de la valeur respectivement actuelle de la seconde grandeur d'entrée et respectivement d'une valeur d'écalée dans le temps de la première grandeur d'entrée, les valeurs de la première grandeur d'entrée s'étendant de la valeur avec le décalage de phase le plus petit possible pour la première grandeur d'entrée jusqu'à la valeur avec le décalage de phase le plus grand possible,
- totalisation de tous les produits,
- calcul de la moyenne de la somme des produits.

6. Procédé selon une des revendications 1 à 5, caractérisé en ce que le traitement passe-haut pour le débit volumique passe par les étapes suivantes :
- formation d'une valeur moyenne de débit volumique,
- calcul de la différence de débit volumique entre le débit volumique respectivement actuel et la valeur moyenne du débit volumique.

7. Procédé selon une des revendications 1 à 6, caractérisé en ce que le traitement passe-haut pour la pression différentielle au réservoir passe par les étapes suivantes :
- formation de la valeur moyenne pour la pression différentielle au réservoir,
- calcul de la différence de pression différentielle au réservoir entre respectivement la pression différentielle au réservoir actuel et la valeur moyenne de la pression différentielle au réservoir.

8. Procédé selon une des revendications 1 à 7, caractérisé en ce que le taux d'impulsion de la vanne d'aération du réservoir est réglé par une fonction auxiliaire.

9. Procédé selon la revendication 8, caractérisé en ce que le taux d'impulsion de la vanne d'aération du réservoir n'est réglé par une fonction aléatoire que lorsque les conditions suivantes sont remplies :
- la pression dans la tubulure d'aspiration se situe au-dessous d'un seuil de pression,
- la moyenne des valeurs différentielles absolues de débit volumique tombe au-dessous d'un seuil supérieur de valeurs moyennes,
- le moteur tourne dans une zone de fonctionnement dans laquelle des modifications durables du taux d'impulsion n'entraînent pas de perturbation.

10. Procédé selon une des revendications 1 à 9, caractérisé en ce que tous les déroulements de procédé sont arrêtés dans des espaces de temps, dans lesquels la moyenne des valeurs absolues différentielles de débit volumique tombe au-dessous d'un seuil inférieur de valeurs moyennes.

11. Dispositif pour la détermination d'une aptitude au fonctionnement d'un système d'aération de réservoir sur un véhicule automobile avec un moteur à combustion interne, ce système d'aération de réservoir comportant un filtre d'adsorption qui par l'intermédiaire d'une canalisation de raccordement est relié à un réservoir et est raccordé à la tubulure d'aspiration du moteur à combustion interne par l'intermédiaire d'une canalisation de vanne sur laquelle est intercalée une vanne d'aération de réservoir, dispositif caractérisé par les moyens fonctionnels suivants :
- un premier dispositif (26) de détermination de valeurs d'entrée pour le traitement passe-haut d'un signal pour le débit volumique à travers la vanne d'aération de réservoir, afin de déterminer un premier signal d'entrée pour une analyse de covariance croisée,
- un second dispositif (27) de détermination de grandeurs d'entrée pour le traitement passe-haut d'un signal pour la différence de pression au réservoir, c'est-à-dire la différence entre la pression dans le réservoir et la pression environnante, pour déterminer la seconde grandeur d'entrée pour l'analyse de covariance croisée,
- un dispositif (28) de covariance croisée pour la détermination du maximum ou de la valeur moyenne de la fonction de covariance croisée concernant le produit des deux grandeurs d'entrée,
- un dispositif (29) de détermination de variance pour former une mesure pour la variance des premières grandeurs d'entrée,
- un formateur de quotients (31) pour calculer un coefficient de correction de transmission par division du maximum ou bien de la valeur moyenne de la fonction de covariance croisée par la mesure précitée pour la variance de la première grandeur d'entrée,
- un dispositif de décision pour rechercher si le coefficient de correction de transmission se situe dans une zone de valeurs prédéfinies, et si c'est le cas, pour juger que le système d'aération de réservoir est apte à fonctionner, dans l'autre cas pour juger qu'il n'est pas apte à fonctionner

12. Système d'aération d'un réservoir avec :
- un réservoir (10) avec dispositif de fermeture (11),
- un filtre d'adsorption (12)
- une canalisation de raccordement au réservoir entre le réservoir et le filtre d'adsorption,
- une vanne d'aération du réservoir (18) sur une canalisation de vanne (15) entre le filtre d'adsorption et la vanne d'aération de réservoir,
système d'aération de réservoir caractérisé en ce que :
- il est prévu sur le filtre d'adsorption un étranglement d'aération (14) vers l'atmosphère et en outre une canalisation d'aération (13) du filtre d'adsorption jusqu'au dispositif de fermeture du réservoir qui est raccordée à celui-ci de façon à fermer lorsque le dispositif de fermeture du réservoir est fermé,
- il est prévu un dispositif selon la revendication 11.
